Europäisches Patentamt

European Patent Office

Office européen des brevets

(11) Veröffentlichungsnummer : **0 073 037
B1**

(12) **EUROPÄISCHE PATENTSCHRIFT**

(45) Veröffentlichungstag der Patentschrift :
07.08.85

(21) Anmeldenummer : 82107643.7

(22) Anmeldetag : 20.08.82

(51) Int. Cl.⁴ : **C 08 K  3/38, C 08 J  3/24,
C 08 J  7/06**

(54) Verfahren zur Vernetzung von Polymeren und Copolymeren mittels Radikalbildnern in Gegenwart von Sauerstoff.

(30) Priorität : 21.08.81 DE 3133219

(43) Veröffentlichungstag der Anmeldung :
02.03.83 Patentblatt 83/09

(45) Bekanntmachung des Hinweises auf die Patenterteilung : 07.08.85 Patentblatt 85/32

(84) Benannte Vertragsstaaten :
CH DE FR GB IT LI NL SE

(56) Entgegenhaltungen :
EP-A- 0 025 591

(73) Patentinhaber : Luperox GmbH
Wasserburg Denzinger Strasse 7
D-8870 Günzburg (DE)

(72) Erfinder : Groepper, Jürgen
Denzingen Hinter den Gärten 12
D-8870 Günzburg (DE)

(74) Vertreter : Abitz, Walter, Dr.-Ing. et al
Abitz, Morf, Gritschneder, Freiherr von Wittgenstein
Postfach 86 01 09
D-8000 München 86 (DE)

## Beschreibung

Die Erfindung betrifft die Vorbehandlung von Polymeren und Copolymeren, die mittels Initiatoren für freie Radikale in Gegenwart von Sauerstoff vernetzt werden sollen. Aus der technischen Literatur ist es bekannt, die Vernetzung von Copolymeren, besonders von dicken und komplizierten Profilen, Durch Schwefel unter Anwendung der UHF-Heißluft-Methode oder der Scherkopf-Heißluft-Methode durchzuführen. Es ist weiter bekannt, daß die Vernetzung mit Radikalinitiatoren, wie organische Peroxide, in Gegenwart von Sauerstoff zu unvollständig vernetzten und klebrigen Oberflächen der Teile führt (vgl. z. B. Farbenfabriken Bayer, Merkblatt vom 2.3.1962, Levapren 450 (Athylvinylacetat), Abschnitt 7.1.1 bis 7.1.5 sowie Merkblatt vom 1.12.1965 Urepan (Urethankautschuk), Seite 15, erster Abschnitt, und Chemische Werke Hüls, Mai 1976, 3. Auflage, Buna AP (EPM/EPDM), Baueinsatz « Hinweise für Verarbeiter », Seite 4).

Die Klebrigkeit tritt besonders bei hochgefüllten und ölverstreckten Copolymeren auf, wie Äthylen-Propylen-Copolymeren, (EPM), Äthylen-Propylen-Dienmonomer-Copolymeren (BPDM), Styrol-Butadien-Kautschuk (SBR), Acrylnitril-Butadien-Kautschuk (NBR), Naturkautschuk (cis-1,4-Polyisopren) (NR), Isoprenkautschuk (IR), Äthylen-vinylacetat-Copolymeren (EVA), Acrylnitril-Butadien-Styrol-Copolymer (ABS), Styrol-Isopren-Styrol-Copolymer (SIS), Chloroprenkautschuk (CR), chloriertem Polyäthylen (DM) und Polymethankautschuk. Um die bessere Qualität von mit Radikalinitiatoren vernetzten Polymeren zu erhalten, hat man die Vernetzung mittels organischer Peroxid-Initiatoren in einem geschmolzenen Salzbad, bekannt als « liquid curing method » (LCM), im Dampfrehr oder in anderen geschlossenen Systemen vorgenommen. Eine weitere Möglichkeit ist in der DE-OS-2 936 906 beschrieben, die die Behandlung der Oberfläche mit Lösungen von Metallseifen, wie Kobaltoktoat, Ceroktoat, Eisenoktoat, usw. beschribt.

Es wurde nun überraschend gefunden, daß die Behandlung von mittels Radikalbildnern in Gegenwart von Sauerstoff vernetzbaren Polymeren und/oder Copolymeren nach der Verformung, aber vor dem Vernetzungsvorgang, mit pulvriger Borsäure oder Borsäureanhydrid oder Gemischen davon zu gehärteten Produkten führt, die klebfreie, kratzfeste und lösungsmittelbeständige Oberflächen aufweisen.

Die Erfindung betrifft daher ein Verfahren zur Vernetzung von Polymeren und/oder Copolymeren, die übliche Zusatz- und Füllstoffe enthalten können, mittels Radikalbildnern in Gegenwart von Sauerstoff, das dadurch gekennzeichnet ist, daß man die Polymeren und/oder Copolymeren nach dem Verformen, aber vor dem Vernetzen zur Verhinderung der Oberflächenklebrigkeit mit (a) pulvriger Borsäure, (b) pulvrigem Borsäureanhydrid oder (c) Gemischen davon behandelt.

Als Radikalbildner kommen beispielsweise organische Peroxid- oder Azoverbindungen in Frage. Die Vernetzung kann durch Erwärmen mittels Scherkopf- und/oder Ultrahochfrequensbestrahlung- (UHF) und/oder Heißluft-/Heizsystemen erfolgen.

Die pulvrige Borsäure oder Borsäureanhydrid oder die Gemische davon werden mit in der Gummiindustrie üblichen Bepuderungsanlagen auf die Profile, Rohre oder andere Teile aufgetragen und der Überschuß des Pulvers wiederum entfernt. Diese Puderanlagen erzeugen durch Staubdüsen eine Staubatmosphäre, oder enthalten ein durch Gas oder Luft aufgelockertes Pulverbad oder rotierende Bürsten, durch welche das Pulver an die Profiloberfläche gebracht wird. Der nicht an der Oberfläche haftende Überschuß wird abgesaugt, abgeblasen oder abgebürstet, da er sich sonst unnötig in der UHF- oder Heißluftanlage ablagert. Bevorzugt werden pulvrige Borsäure oder Borsäureanhydrid auf die Formteile durch Aufblasen, Streichen oder Pudern aufgebracht.

Das Pulver wird vorzugsweise in Mengen von 200 mg/m² bis 10 000 mg/m², besonders bevorzugt 400 mg/m² bis 2 000 mg/m² auf die Formteiloberfläche aufgebracht.

Das Pulver sollte eine Partikelgröße von maximal 90 μm, bevorzugt von ≤ 20 μm haben, damit keine zu großen Borsäure- oder Borsäureanhydrid-Teilchen in die noch thermoplastische Oberfläche eingedrückt werden und diese verletzen.

Sämtliche mit geeigneten Quellen für freie Radikale vernetzbaren, gefüllten und ungefüllten Polymere und Copolymere können erfindungsgemäß mit den oben genannten Borverbindungen behandelt werden, um klebfreie Oberflächen zu erhalten, Besonders geeignet für diese Behandlung zur Vermeidung klebriger Oberflächen nach der Härtung sind Polymere und Copolymere auf der Basis von α-Olefinen. Beispiele für gegebenenfalls hochgefüllte und ölverstreckte Copolymere sind :

EPM Äthylen-Propylen-Copolymer
EPDM Äthylen-Propylen-Dienmonomer-Copolymere (als Dienmonomere geeignet sind z. B. Äthylennorbornen, Cyclopentadien, Butadien, u. a.)
SBR Styrol-Butadien-Kautschuk
EVA Äthylen-vinylacetat-Copolymer
NBR Nitril-Butadien-Kautschuk
NR Naturkautschuk
IR Isoprenkautschuk
ABS Acrylnitril-Butadien-Kautschuk
SBS Styrol-Butadien-Styrol-Kautschuk

SIS Styrol-Isopren-Styrol-Copolymer
CR Chloroprenkautschuk
CM Homopolymeres chloriertes Polyäthylen
AU Polyurethankautschuk (vom Polyestertyp)
und Polymethankautschuk.

Die Mischungen setzen sich allgemein zusammen aus Polymer und/oder Copolymer mit verschiedenen üblichen Zusätzen, wie Verstärkungsmittel und Füllstoffe, wie Ruß, Metalloxide, Tone, Carbonate, Silicate, Pigment, weiterhin Radikalbildner, Aktivatoren, Coagentien, Antioxidantien, Stabilisatoren, Weichmacher, Hilfsöle bzw. Öle und/oder Strecköle.

Die Radikalbildner, wie übliche organische Peroxide, Azoverbindungen und C-C-Initiatoren, werden in der Größenordnung 0,1 bis 15 Gew.-%, bezogen auf die fertige Mischung, üblicherweise von 1 bis 10 Gew.-%, zugesetzt.

Coagentien, wie Triallylcyanurat, Triallylphosphat, Äthylenglykoldimethacrylat, Trimethylolpropantrimethacrylat, Divinylbenzol, Diallylmaleinat, u. a., können in Mengen von 0 bis 5 Gew.-%, bezogen auf die fertige Mischung, üblicherweise von 0,5 bis 3 Gew.-%, anwesend sein.

Durch das erfindungsgemäße Verfahren wird es möglich, die Bildung klebriger Oberflächen bei der peroxidischen Vernetzung von Polymeren und/oder Copolymeren an der Luft zu vermeiden.

Die in den nachfolgenden Beispielen beschriebenen Gummimischungen wurden auf einer Walzenstuhl hergestellt und zu 4 mm starken Teilen ausgewalzt. Daraus wurden Probekörper von 20 × 80 mm ausgestanzt. Diese Probekörper wurden teils unbehandelt und teils durch Tauchen in pulvrige Borsäure (Korngröße 10 bis 80 µm) oder in pulvriges Borsäureanhydrid (Korngröße 5 bis 75 µm) gepudert und in einem Wärmeschrank bei 180 °C bis 230 °C während 10 Minuten in Anwesenheit von Luftsauerstoff erhitzt. Die aufgepuderte Menge Borsäure oder Borsäureanhydrid auf den Formteilen schwankte zwischen 400 und 750 mg/m². (10 Minuten Erhitzen sind ausreichend, um eine 99 %ige Umsetzung des Peroxids oder Vernetzung zu erzielen). Die vernetzten Probekörper wurden anschließend heiß unter konstanten Druck- und Zeitbedingungen auf ein Papier gepreßt. Nach Entfernung der Probekörper vom Papier blieb ein mehr oder weniger starker, schwarzer, klebriger Abdruck zurück. Die mit den erfindungsgemäßen Verbindungen behandelten Probekörper ließen keinen oder einen weniger intensiven Abdruck als die unbehandelten zurück.

Weiterhin wurde der Abrieb mit einem Spatel und die Löslichkeit der Oberfläche mit Trichloräthylen geprüft. (Siehe entsprechende Tabellen bei den Beispielen).

## Beispiel 1

Eine stark oberflächenklebrige Mischung mit einer Shorehärte von 40 wurde aus 100 Teilen EPDM (enthaltend ein Dienmonomeres vom Äthylidennorbornentyp) mit einer Mooney-Plastizität NL 1 + 4 (100 °C) 65, 90 Teilen HAF-Ruß, 60 Teilen eines hochsiedenden Kohlenwasserstofföls und 4 Teilen Dicumylperoxid 98 %ig, hergestellt.

Die vernetzten, teils bepuderten und teils unbehandelten Probestücke zeigten die in der folgenden Tabelle aufgeführten Eigenschaften :

| Behandlung | Klebrigkeit | Abrieb | Löslichkeit |
|---|---|---|---|
| unbehandelt | + + + | + + + | + + + |
| bepudert mit Borsäure | − − − | − − − | − − − |
| Borsäureanhydrid | − − − | − − − | − − + |
| Zinkborat | − + + | + + + | + + + |
| Borax | − + + | + + + | + + + |
| Zinkstearat | + + + | + + + | + + + |

Erläuterung :

− − − = kein(e)
− − + = schwach(e)
− + + = stärker(e)
+ + + = sehr starke(r)

Borsäure und Borsäureanhydrid funktionierten überraschend gut, die verwendeten Zinkverbindungen nicht.

## Beispiel 2

Eine schwarze Profilmischung auf EPDM-basis mit Dicyclopentadien als Dienmonomeres und einer Shorehärte von 60, die 2,6 % 1,1-Di-tert.-butylperoxy-3,3,5-trimethylcyclohexan 40 %ig und 2,45 % Dicumylperoxid 40 %ig enthält, wurde wie beschrieben teils bepudert teils unbehandelt vernetzt und auf ihre Eigenschaften untersucht.

| Behandlung | Klebrigkeit | Abrieb | Löslichkeit |
|---|---|---|---|
| unbehandelt | + + + | + + + | + + + |
| bepudert mit Borsäure | − − − | − − − | − − − |
| Borsäureanhydrid | − − − | − − − | − − − |
| Borax | − + + | + + + | + + + |
| Zinkborat | + + + | + + + | + + + |

Zeichenerklärung siehe Beispiel 1.

Eine EPM-Mischung ohne Dienmonomeres mit folgender Zusammensetzung wurde wie in Beispiel 1 und 2 beschrieben behandelt und ergab folgende Resultate :
100 Teile EPM, 90 Teile HAF-Ruß, 20 Teile Öl, 8 Teile Dicumylperoxid 40 %ig und 2 Teile Stearinsäure.

| Behandlung | Klebrigkeit | Abrieb | Löslichkeit |
|---|---|---|---|
| unbehandelt | − + + | + + + | + + + |
| bepudert mit Borsäure | − − + | − − + | − + + |
| Borsäureanhydrid | − + + | − + + | − + + |
| Borax | + + + | + + + | + + + |

Zeichenerklärung siehe Beispiel 1.

## Beispiel 4

Dieselbe Mischung wie unter Beispiel 3, jedoch mit zusätzlich 2,5 Teilen Triallylcyanurat als Coagent.

| Behandlung | Klebrigkeit | Abrieb | Löslichkeit |
|---|---|---|---|
| unbehandelt | − + + | + + + | + + + |
| bepudert mit Borsäure | − − − | − − − | − − + |
| Borsäureanhydrid | − − − | − − − | − − + |

## Beispiel 5

Mischung auf Basis SBR mit folgender Zusammensetzung : 100 Teile SBR (1 502), 90 Teile HAF-Ruß, 60 Teile Öl, 2 Teile Stearinsäure und 8 Teile Dicumylperoxid 40 %ig.

| Behandlung | Klebrigkeit | Abrieb | Löslichkeit |
|---|---|---|---|
| unbehandelt | + + + | + + + | + + + |
| bepudert mit Borsäure | − − − | − − − | − − − |
| Borsäureanhydrid | − − − | − − − | − − − |

## Beispiel 6

Mischung auf Basis EVA mit 60 % Vinylacetat mit folgender Zusammensetzung :
100 Teile EVA, 50 Teile HAF-Ruß, 20 Teile Öl, 1 Teil Stearinsäure, 2 Teile Dicumylperoxid 40 %ig und 2 Teile Triallylcyanurat.

| Behandlung | Klebrigkeit | Abrieb | Löslichkeit |
|---|---|---|---|
| unbehandelt | − + + | + + + | + + + |
| bepudert mit Borsäure | − − − | − − − | − − + |
| Borsäureanhydrid | − − − | − − − | − − − |

## Patentansprüche

1. Verfahren zur Vernetzung von Polymeren und/oder Copolymeren, die übliche Zusatz- und Füllstoffe enthalten können, mittels Radikalbildnern in Gegenwart von Sauerstoff, dadurch gekennzeich-

4

net, daß man die Polymeren und/oder Copolymeren nach dem Verformen, aber vor der Vernetzung, zur Verhinderung der Oberflächenklebrigkeit mit

    a) Borsäure

    b) Borsäureanhydrid oder

    c) Gemischen davon in Pulverform behandelt.

2. Verfahren nach Anspruch 1, dadurch gekennzeichnet, daß man Borsäure und Borsäureanhydrid als Pulver auf die Formteile aufbläst, streicht oder pudert.

## Claims

1. Process for cross-linking polymers and/or copolymers optinally containing customary additives and fillers by means of radical-forming agents in the presence of oxygen, characterised in that the polymers and/or copolymers are after the shaping but before the cross-linking treated with

    a) boric acid

    b) boric anhydride or

    c) mixtures thereof in powder form in oder to inhibit surface tackiness.

2. Process according to claim 1 characterised in that boric acid boric acid as powder is blown, coated or powdered onto the shaped parts.

## Revendications

1. Procédé de réticulation de polymères et/ou de copolymères qui peuvent contenir des additifs et des charges classiques, au moyen de générateurs de radicaux en présence d'oxygène, caractérisé en ce qu'on traite les polymères et/ou les copolymères après le formage, mais avant la réticulation, pour empêcher l'adhésivité de surface, avec

    a) l'acide borique

    b) l'anhydride d'acide borique ou

    c) des mélanges de ces composés sous forme de poudre.

2. Procédé suivant la revendication 1, caractérisé en ce que de l'acide borique et de l'anhydride borique sont appliqués sur les pièces moulées, sous forme de poudre, par soufflage, badigeonnage ou poudrage.